(19) Europäisches Patentamt
European Patent Office
Office européen des brevets

(11) Publication number: **0 266 127 B1**

(12) **EUROPEAN PATENT SPECIFICATION**

(45) Date of publication of patent specification: **26.06.91**

(51) Int. Cl.[5]: **C01B 11/02**, C25B 1/26

(21) Application number: **87309334.8**

(22) Date of filing: **22.10.87**

(54) **Selective removal of chlorine from solutions of chlorine dioxide and chlorine.**

(30) Priority: **29.10.86 CA 521735**

(43) Date of publication of application:
**04.05.88 Bulletin 88/18**

(45) Publication of the grant of the patent:
**26.06.91 Bulletin 91/26**

(84) Designated Contracting States:
**AT DE ES FR SE**

(56) References cited:
**US-A- 4 256 554**

(73) Proprietor: **Tenneco Canada Inc.**
**2 Gibbs Road**
**Islington Ontario M9B 1R1(CA)**

(72) Inventor: **Lipsztajn, Marek**
**2757 Kipling Avenue Apartment 1304**
**Rexdale Ontario M9V 4C4(CA)**

(74) Representative: **Hamilton, Raymond et al**
**c/o Albright & Wilson Limited, P.O. Box 2098,**
**7 Stars Road**
**Oldbury, Warley, West Midlands B69**
**4PR(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to the selective electrolytic removal of chlorine from aqueous solutions of chlorine dioxide and chlorine.

Chlorine dioxide is extensively used as a bleach chemcical for wood pulps and may be formed by a variety of processes. Most large scale commercial operations are based on reduction of sodium chlorate in an aqueous acid reaction medium. The chlorine dioxide usually is dissolved in water and is used as an aqueous solution.

Chlorine usually is coproduced with the chlorine dioxide, either as a result of the employment of added chloride ions as the reducing agent or as a result of inefficiencies in the chlorine dioxide generating process.

It often is desirable to provide an aqueous chlorine dioxide solution which is substantially chlorine free, for example, in pulp bleaching operations where a high proportion of chlorine dioxide is required. Prior proposals for the separation of chlorine from aqueous chlorine dioxide solutions have involved selective stripping procedures, as described in U.S. Patent No. 3,854,901, assigned to the assignee hereof.

It has now been found that chlorine can be selectively removed electrolytically from aqueous solutions of chlorine dioxide and chlorine. According to the present invention, there is provided a method for the treatment of an aqueous solution of chlorine dioxide and chlorine, which comprises selectively cathodically reducing at least a portion of the chlorine at a pH of the aqueous solution of up to about 4, without substantially decreasing the concentration of chlorine dioxide in the resulting treated solution. The chlorine dioxide concentration is substantially unaffected and only the chlorine is reduced to chloride ion. The electrolytic process may be applied to effect removal of some or all of the dissolved chlorine, as desired. The chlorine may be reduced directly or indirectly, depending on the process conditions, as described in more detail below.

Figures 1 to 4 are graphical representations of the voltammetric reduction of chlorine and chlorine dioxide in aqueous solution.

In order to effect selective removal of chlorine from an aqueous solution of chlorine dioxide and chlorine, there are a number of parameters which must be controlled, as discussed in detail below.

One such criticality is the pH of the aqueous solution of chlorine dioxide and chlorine. For direct reduction of chlorine, a pH value no greater than about 2 is required. At pH values below 2, the chlorine is present in the aqueous phase as $Cl_2$ and hence can be directly reduced. At higher pH values up to about 4, the chlorine is present in an equilibrium condition with other forms of "active chlorine", mainly HOCl, which permits indirect reduction of the chlorine to chloride ion. The effectiveness of the chlorine removal process at such pH values then is dependent upon the rate of the equilibrium reaction:

$$HOCl + HCl\ Cl_2 + H_2O$$

For these reasons, it is necessary to operate at a maximum pH of about 2 for direct reduction while indirect reduction, as described in more detail below, may be effected up to about pH 4. At pH values above 4, the "active chlorine" does not include free $Cl_2$ and selective reduction of $Cl_2$ to chloride ion, therefore, is not possible.

The pH of the medium is the pH of the solution as it enters the electrode. Locally highly negative electrode potentials in the electrode may cause the pH to exceed the desired value, although this will not affect the overall effectiveness of the process.

A cathode having a low overpotential to the electrolytic reaction $Cl_2 \rightarrow Cl^-$ is useful for solutions having a pH of up to about 2.

As is well known to those skilled in the electrochemical art, the overpotential of an electrode towards the electrochemical reaction $Cl_2/Cl^-$ refers to the relationship of the potential applied to the electrode to the equilibrium potential to sustain the electrochemical reaction at a reasonable rate. If the electrode potential is close to the equilibrium potential, then the electrode is considered to have a "low" overpotential while, if a much more negative potential is required to achieve a significant reduction rate, then the electrode is considered to have a "high" overpotential.

Materials of construction of such low overpotential electrodes are known and are employed in the so-called "Dimensionally Stable Electrodes". Such electrodes generally comprise a substrate, which is titanium, zirconium, tantalum or hafnium, having an electroconductive coating thereon, which may be a precious metal, for example, platinum; a precious metal alloy, for example, a platinum-iridium alloy; a metal oxide, for example, ruthenium oxide or titanium dioxide; a platinate, for example, lithium platinate or calcium platinate; or mixtures of two or more of such materials. Any of these materials may be employed to provide

the material of construction of the low overpotential cathode. A platinum surface typically has an overpotential to the $Cl_2/Cl^-$ reaction of about 40 mV.

The use of high overpotential electrodes, for example, carbon electrodes; also is useful at pH values up to about 2 and is preferred at higher pH values up to about 4. With such electrodes, the reactions involved do not include the direct electroreduction of the chlorine which occurs with the low overpotential cathodes, but rather is an indirect reduction wherein the chlorine is chemically reduced to chloride by chlorite ion which is itself electrochemically produced from chlorine dioxide, in accordance with the following reactions:

$$2ClO_2 + 2e \rightarrow 2ClO_2^-$$

$$2ClO_2^- + Cl_2 \rightarrow 2ClO_2 + 2Cl^-$$

The overall reaction, therefore, is:

$$Cl_2 + 2e \rightarrow 2Cl^-$$

The physical form of the cathode used in the present invention is not critical and may be a flat plate electrode or, more preferably, a high surface area cathode having a three-dimensional electrolyte-contacting surface. The latter type of electrode permits a long contact time between the aqueous solution of chlorine dioxide and chlorine.

The term "high surface area" in relation to the cathode refers to an electrode of the type wherein the electrolyte is exposed to a large surface area of electrode surface in comparison to the physical dimensions of the electrode. The electrode is formed with interstices through which the electrolyte flows, and so has a three-dimensional surface of contact with the electrolyte.

The high surface area cathode may be the so-called "flow through" type, wherein the electrode is formed of electroconductive porous material, for example, layers of electroconductive cloth and the electrolyte flows through the porous structure generally parallel to the current flow while being subjected to electrolysis, and thereby is exposed to the high surface area of the mesh of the electrode.

The high surface area cathode may also be the so-called "flow by" type, wherein the electrode comprises a packed bed of individual electroconductive particles and the electrolyte flows through the packed bed generally perpendicular to the current flow while being subjected to electrolysis, and thereby is exposed to the high surface area of the electroconductive particles in the packed bed.

The high surface area of the cathode permits the electrolyte to contact the cathode for an extended period of time, so as to permit electrolytic reduction of the chlorine to chloride ions to occur. The surface area employed and the conditions of operation of the electrolytic cell depend on the concentration of chlorine present in the aqueous solution of chlorine dioxide and chlorine. Depending on the cell capacity, the electrolyte may be circulated a number of times through t he high surface area cathode to reduce the dissolved chlorine.

The cell in which the electrolysis is effected in accordance with the present invention may have any convenient construction. Usually, the cell is divided into anolyte and catholyte compartments by an ion-exchange membrane, usually a cation-exchange membrane so as to prevent the interaction of gases produced at the anode, usually oxygen, with the chlorine dioxide and the electroreduction at the cathode. With such a divided cell, the anolyte may be any desired electrolyte, typically an acid medium, such as sulphuric acid. The anode of the cell may be constructed of any desired electroconductive material, for example, graphite or metal.

Another important feature of the invention is the electrode potential which is applied to the cathode. It is strongly preferred for the embodiment of the invention effected at pH values up to about 2, i.e. direct reduction, that the electrode potential of the low overpotential electrode be about + 0.8 to about 1.2 volts as compared with a saturated calomel electrode (SCE), preferably about +1 volts vs. SCE. At more negative electrode potentials than + 0.8 volts, the electroreduction no longer is selective for aqueous solutions of chlorine dioxide and chlorine having a pH up to about 2 and electroreduction of chlorine dioxide can occur. At more positive electrode potentials than + 1.2 volts, electroreduction of chlorine does not occur. For the embodiment of the invention effected at pH values up to about 4, i.e. indirect reduction, it is essential that the electrode potential of the high overpotential electrode be about +0.8 to about -0.6 volts as compared with SCE.

The electrode potential of the the electrode refers to the solution potential measured at the current feeder, in analogous manner to a flat plate electrode. A three-dimensional electrode, such as employed herein, inherently has a distribution of potential within the structure and the actual potential will depend on the location of determination and may be more negative than 0.6 volt.

The voltage which is applied between the anode and cathode to provide the desired electrode potential depends on the materials of construction of the cathode and anode but generally is less than about 2 volts. A constant voltage mode of application of the electrode potential is preferred, although other modes may be adopted.

The aqueous solution of chlorine dioxide and chlorine which is treated in accordance with the present invention usually is one formed by dissolving in water chlorine dioxide in the off-gas stream from a chlorine dioxide generator. Such solution contains a variable concentration of chlorine dioxide, depending on the flow rate of the water to the absorption tower and temperature of the water passing to the absorption tower and also a variable concentration of chlorine, also depending on the above-noted variables but also depending on the partial pressure of chlorine in the generator off-gas stream. Usually, the aqueous solution of chlorine dioxide and chlorine contains about 0.01 to about 10g/L of chlorine.

The cathodic reduction of the chlorine contained in the aqueous solution of chlorine dioxide and chlorine may be effected to any desired degree of removal, depending on the end use to which the solution is to be put. Usually, the cathiodic electrolysis is effective in rapidly decreasing the chlorine concentration to very low levels.

By the use of a critical combination of parameters, it is possible to selectively, and if desired completely, remove chlorine from an aqueous solution of chlorine dioxide and chlorine, either directly or indirectly, by electromcheimcal means. The procedure is rapid and is not capital intensive, in contrast to the prior art procedures discussed above.

## EXAMPLES

### Example 1

Voltammetric studies were effected on an aqueous solution containing about 1.5 g/l of chlorine dioxide and about 1.1 g/l of chlorine and having a pH of 1.1 using a rotating platinum disc electrode having a surface area of 0.196 $cm^2$ for the reaction $Cl_2 \rightarrow Cl^-$. The electrode was rotated at 400 rpm during the electroreduction. The reduction current was plotted against the applied potential and the results are reproduced in Figure 1.

As may be seen from this data, the potential at which chlorine reduction occurs is quite different from that at which chlorine dioxide occurs with the low overvoltage platinum material.

As may also be seem from that data, selective removal of chlorine occurs at these pH values using a low overpotential cathode in only the narrow range of applied potential of + 0.8 to + 1.2 volts vs. SCE.

### Example 2

The voltammetric studies of Example 1 were repeated for variations in the pH of the solution. The reduction current again was plotted against the applied potential and the results are reproduced in Figure 2.

As may be seen from this data, a change of pH towards more alkaline values shifts the potential at which electroreduction of chlorine occurs to more negative values (vs. SCE), while the potential for electroreduction of chlorine dioxide remains unaltered. This data also demonstrates the preference for pH values less than 2 for the direct reduction reaction.

### Example 3

The voltammetric studies of Example 1 were repeated for variations in concentrations of chlorine dioxide and chlorine pH 0.6. The reduction current again was plotted against the applied potential and the results are reproduced in Figure 3. The labelled curves are identified, as follows:

| Curve No. | Concentrations g/ℓ | |
|---|---|---|
| | $ClO_2$ | $Cl_2$ |
| 1 | 0.9 | 0.7 |
| 2 | 1.5 | 1.3 |
| 3 | 2.1 | 1.8 |
| 4 | 2.6 | 2.2 |
| 5 | 2.9 | 2.6 |

As may be seen from the data presented in Figure 3, the electrode potential required for selective removal of chlorine is independent of chlorine concentration and of chlorine dioxide concentration.

Example 4

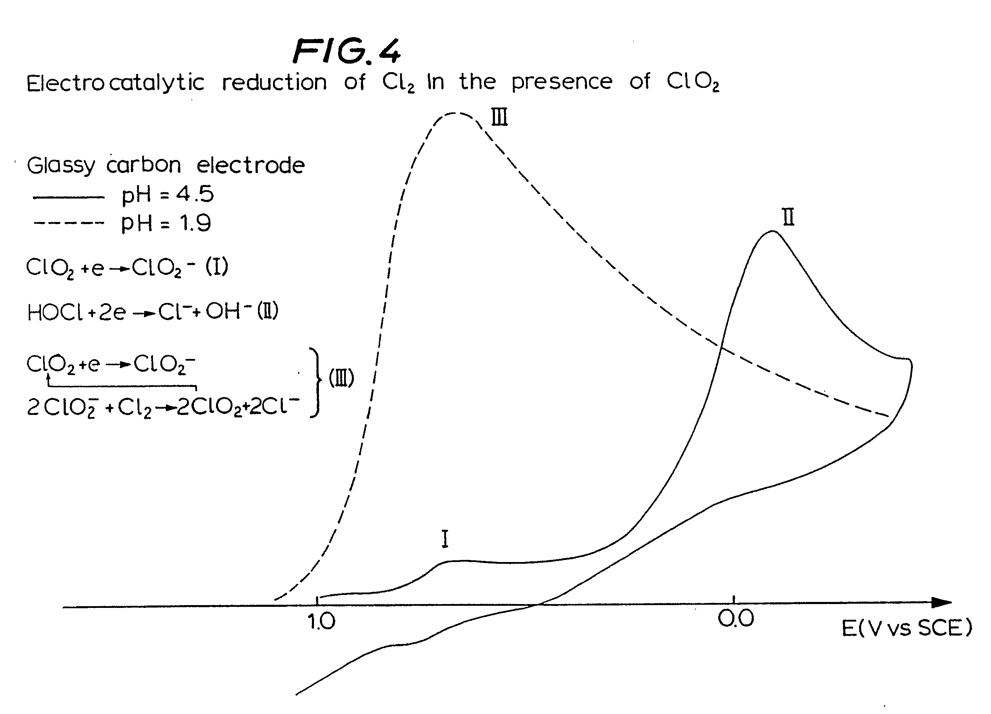

The voltammetric studies of Example 1 were repeated using a glassy carbon cathode of overpotential to the reaction $Cl_2 \rightarrow Cl^-$ of about 0.5 volts, at varying pH values. The reduction current again was plotted against the applied potential and the results are reproduced in Figure 4.

As may be seen from the data, using a high overpotential cathode does not permit direct electrochemical reduction of chlorine, although chemical reduction of chlorine by electrolytically-formed chlorite may be effected under quite different electrode potential conditions.

Example 5

This Example illustrates the indirect removal of chlorine from aqueous solutions of chlorine dioxide and chlorine using a high overpotential cathode.

A series of electrolytic experiments were carried out in which an aqueous solution of chlorine dioxide and chloride was treated in the cathode chamber of a cation-exchange membrane-divided electrolytic cell operated in a flow-by mode. The cathode chamber had a three-dimensional reticulated vitreous carbon electrode equipped with a DSA current feeder. The cathode possessed the superficial dimensions of length 17 cm, width 3.3 cm and thickness 0.3 cm. The anode chamber had a glassy carbon anode and the electrolysis were carried out in a potentiostatic mode with cathode potential set in the range of limiting current formation for the $ClO_2$ reduction process. The anolyte was 0.5 N sulphuric acid and the anolyte and catholyte flow rates were each 140 ml/min. The membrane was made of "NAFION" (trade mark of Du Pont for a perfluorinated sulfonic acid-type membrane material).

The results obtained are set forth in Table I. As may be seen from the data presented therein, removal of chlorine was rapid and effective, particularly at higher chlorine dioxide contents and low pH. Losses of chlorine dioxide varied between zero and about 10%, demonstrating the selectivity of the electrolysis process.

In summary of this disclosure, the present invention provides a novel elecrochemical process for the selective removal of chlorine from aqueous solutions of chlorine dioxide and chlorine by using a critical set of parameters for the electrolysis. Modifications are possible within the scope of this invention.

TABLE I

| No. of | ORP (V vs SCE) | Applied potential (V vs SCE) | Current Amps | pH | $Cl_2$ (g/ℓ) | $ClO_2$ (g/ℓ) | NaCl (g/ℓ) | Duration of Run [min] | Total charge passed [C] |
|---|---|---|---|---|---|---|---|---|---|
| 1 Initial | 0.977 | 0.60 | 2.2 | - | 0.66 | 5.65 | 1.79 | | |
| Final | - | 0.60 | - | 1.6 | 0 | 5.67 | 2.16 | 3 | 503 |
| 2 Initial | 1.005 | 0.65 | 1.68 | 1.35 | 0.43 | 4.79 | 2.33 | | |
| Final | 0.900 | 0.65 | 1.20 | 1.28 | 0.16 | 4.76 | 2.87 | 6 | 522 |
| 3 Initial | 1.027 | 0.60 | 2.31 | - | 0.81 | 5.35 | 2.61 | | |
| Final | 0.965 | 0.60 | 1.99 | 1.40 | 0.28 | 5.94 | 3.18 | 6 | 715 |
| 4 Initial | 1.015 | 0.56 | 2.60 | - | 0.87 | 6.23 | 2.27 | 6 | |
| Final | 0.910 | 0.56 | 2.20 | 1.36 | 0.18 | 5.99 | 3.06 | | 852 |
| 5 Initial | 1.046 | 0.57 | 2.10 | - | 0.75 | 3.49 | 2.04 | | |
| Final | 0.844 | 0.57 | 1.20 | 1.31 | 0.11 | 3.03 | 3.40 | 12 | 1157 |
| 6 Initial | 1.043 | 0.60 | 2.07 | - | 0.91 | 4.27 | 2.61 | | |
| Final | 0.886 | 0.60 | 1.90 | 1.44 | 0.46 | 4.11 | 2.95 | 4 | 450 |
| 7 Initial | 1.008 | 0.60 | 1.80 | - | 0.55 | 4.42 | 1.30 | | |
| Final | - | 0.60 | 1.40 | 1.44 | 0.12 | 4.08 | 2.38 | 5 | 552 |
| 8 Initial | 1.107 | 0.54 | 2.10 | 0.7 | 0.95 | 4.93 | 2.61 | | |
| Final | 0.825 | 0.54 | 1.50 | 0.8 | 0.21 | 4.45 | 3.29 | 6 | 750 |
| 9 Initial | 0.951 | 0.50 | 1.58 | 2.6 | 0.43 | 4.99 | 2.61 | | |
| Final | 0.830 | 0.50 | 1.20 | 2.0 | 0.10 | 4.16 | 3.18 | 7 | 623 |
| 10 Initial | 0.899 | 0.54 | 1.11 | 4.0 | 0.17 g/ℓ $Cl_2$<br>0.77 g/ℓ NaOCl | 3.46 | 3.40 | | |
| Final | 0.703 | 0.54 | 0.90 | 2.6 | 0.22 g/ℓ $Cl_2$<br>0.51 g/ℓ NaOCl | 2.82 | 4.09 | 7 | 416 |

## Claims

1. A process for the treatment of an aqueous solution of chlorine dioxide and chlorine, so as to decrease the proportion of chlorine which comprises selectively cathodically reducing at least a portion of said chlorine, said solution having a pH of not greater than 4.

2. A process according to claim 1, characterised in that the concentration of chlorine dioxide in the solution is not substantially decreased.

3. A process according to any one of the preceding claims, characterised in that said selective cathodic reduction of chlorine is effected directly in a solution having a pH of no greater than 2 using an electrode having a low overpotential for the electrolytic reaction $Cl_2$ $Cl^-$ at an applied potential of about + 0.8 to about + 1.2 volts as compared with a saturated calomel electrode (SCE).

4. A process according to claim 3, characterised in that said applied electrode potential is about 1 volt.

5. A process according to any of the preceding claims, characterised in that said electrode has an electroconductive surface constructed of an electroconductive metal, metal alloy, metal oxide or metal compound.

6. A process according to either of claims 1 or 2, characterised in that said selective cathodic reduction of chlorine is effected indirectly carried out using a high overpotential cathode in a solution having a pH of up to 4 at an applied voltage of + 0.8 to - 0.6 volts as compared with SCE.

7. A process according to any of the preceding claims, characterised in that said electrode is a high surface area cathode having a three-dimensional, electrolyte-contacting surface.

8. A process according to claim 7, characterised in that said cathode comprises stacked layers of electroconductive mesh material through the interstices of which percolates the aqueous solution of chlorine dioxide and chlorine generally parallel to the current flow.

9. A process according to claim 7, characterised in that said cathode comprises a packed bed of individual electroconductive particles through which percolates the aqueous solution of chlorine dioxide and chlorine generally perpendicular to the current flow.

10. A process according to any of the preceding claims, characterised in that said cathode is located in a cathode chamber of a cell, an anode is located in an anode chamber of the cell and the anode chamber and cathode chamber are separated by an ion-exchange membrane.

11. A process according to any one of the preceding claims, characterised in that constant voltage is applied to the cathode and an anode during the electrolytic reduction of the chlorine.

12. A process according to claim 11, characterised in that the applied voltage between the anode and the cathode is less than about 2 volts.

13. A process according to any of the preceding claims, characterised in that said aqueous solution of chlorine dioxide and chlorine contains about 0.1 to about 0 g/l of chlorine dioxide and about 0.01 to about 10 g/l of chlorine.

## Revendications

1. Procédé pour le traitement d'une solution aqueuse de dioxyde de chlore et de chlore, de façon à diminuer la proportion de chlore, qui consiste à faire subir une réduction cathodique sélective à au moins une partie de ce chlore, la solution ayant un pH non supérieur à 4.

2. Procédé selon la revendication 1, caractérisé en ce que la concentration du dioxyde de chlore dans la solution ne subit pas une forte diminution.

3. Procédé selon l'une quelconque des revendications précédentes, caractérisé en ce que ladite réduction cathodique sélective du chlore est réalisée directement dans une solution dont le pH n'est pas supérieur à 2, par l'utilisation d'une électrode ayant un faible excédent de potentiel pour la réaction électrolytique $Cl_2 \rightarrow Cl^-$, pour un potentiel appliqué d'environ +0,8 à environ +1,2 volts, par comparaison avec une électrode au calomel saturée (SCE).

4. Procédé selon la revendication 3, caractérisé en ce que le potentiel d'électrode appliqué est d'environ 1 volt.

5. Procédé selon l'une quelconque des revendications précédentes, caractérisé en ce que ladite électrode possède une surface électroconductrice réalisée en un métal, un alliage métallique, un oxyde métallique ou un composé métallique électroconducteurs.

6. Procédé selon l'une quelconque des revendications 1 ou 2, caractérisé en ce que ladite réduction cathodique sélective du chlore est réalisée d'une manière indirecte à l'aide d'une cathode à excédent élevé de potentiel, dans une solution ayant un pH inférieur ou égal à 4, à une tension appliquée de

+0,8 à -0,6 volt par rapport à une électrode SCE.

7. Procédé selon l'une quelconque des revendications précédentes, caractérisé en ce que ladite électrode est une cathode d'aire élevée, présentant une surface tridimensionnelle de contact avec l'électrolyte.

8. Procédé selon la revendication 7, caractérisé en ce que ladite cathode est constituée de couches empilées d'un matériau maille électroconducteur, à travers les interstices duquel passe la solution aqueuse de dioxyde de chlore et de chlore, généralement Parallèle à l'écoulement du courant.

9. Procédé selon la revendication 7, caractérisé en ce que ladite cathode comprend un lit garni de particules électroconductrices individuelles à travers lequel passe la solution aqueuse de dioxyde de chlore et de chlore, d'une manière générale perpendiculairement à l'écoulement du courant.

10. Procédé selon l'une quelconque des revendications précédentes, caractérisé en ce que ladite cathode est située dans une chambre cathodique d'une cellule, qu'une anode est située dans une autre chambre de la cellule, et que la chambre anodique et la chambre cathodique sont séparées par une membrane échangeuse d'ions.

11. Procédé selon l'une quelconque des revendications précédentes, caractérisé en ce qu'une tension constante est appliquée à la cathode et à l'anode pendant la réduction électrolytique du chlore.

12. Procédé selon la revendication 11, caractérisé en ce que la tension appliquée entre l'anode et la cathode est inférieure à environ 2 volts.

13. Procédé selon l'une quelconque des revendications précédentes, caractérisé en ce que ladite solution aqueuse de dioxyde de chlore et de chlore contient environ 0,1 à environ 0 g/l de dioxyde de chlore et d'environ 0,01 à environ 10 g/l de chlore.

## Ansprüche

1. Verfahren zur Behandlung einer wässerigen Lösung von Chlordioxid und Chlor mit dem Zweck, den Chloranteil herabzusetzen, bei welchem Verfahren zumindest ein Teil dieses Chlors in der Lösung selektiv kathodisch reduziert wird und diese Lösung einen pH-Wart von nicht mehr als 4 hat.

2. Verfahren nach Anspruch 1, dadurch gekennzeichnet, daß die Konzentration des Chlordioxids in der Lösung nicht wesentlich herabgesetzt wird.

3. Verfahren nach irgendeinem der vorhergehenden Ansprüche, dadurch gekennzeichnet, daß diese selektive kathodische Chlorreduktion direkt in einer Lösung mit einem pH-Wert von nicht mehr als 3 durchgeführt wird, wobei eine Elektrode mit einem geringen Überpotential für die elektrolytische Reaktion $Cl_2 \rightarrow Cl^-$ bei einem angelegten Potential von etwa +0,8 bis etwa +1,2 V im Vergleich zu einer gesättigten Calomel-Elektrode (saturated calomel electrode SCE) verwendet wird.

4. Verfahren nach Anspruch 3, dadurch gekennzeichnet, daß dieses angelegte Elektrodenpotential etwa 1 V beträgt.

5. Verfahren nach irgendeinem der vorhergehenden Ansprüche, dadurch gekennzeichnet, daß diese Elektrode eine elektrisch leitende Oberfläche hat, die aus einem elektrisch leitenden Metall, Metalloxid, einer elektrisch leitenden Metall-Legierung, oder Metallverbindung aufgebaut ist.

6. Verfahren nach Anspruch 1 oder 2, dadurch gekennzeichnet, daß diese selektive kathodische Chlorreduktion indirekt ausgeführt wird, wobei sie unter Einsatz einer Kathode mit hohem Überpotential in einer Lösung mit einem pH-Wert von bis zu 4 bei einer angelegten Spannung von +0,8 bis -0,6 V im Vergleich zu SCE vorgenommen wird.

7. Verfahren nach irgendainem der vorhergehenden Ansprüche, dadurch gekennzeichnet, daß diese Elektrode eine großflächige Kathode mit einer dreidimensionalen, mit Elektrolyt in Kontakt stehenden Oberfläche ist.

8. Verfahren nach Anspruch 7, dadurch gekennzeichnet, daß diese Kathode übereinandergeordnete Schichten aus elektrisch leitendem Maschenmaterial aufweist, durch dessen Zwischenräume die wässerige Lösung von Chlordioxid und Chlor im allgemeinen parallel zu der Strömungsrichtung percoliert.

9. Verfahren nach Anspruch 7, dadurch gekennzeichnet, daß diese Kathode ein gepacktes Bett einzelner elektrisch leitender Teilchen umfaßt, durch welche die wässerige Lösung von Chlordioxid und Chlor im allgemeinen im rechten Winkel zu der Strömungsrichtung percoliert.

10. Verfahren nach irgendeinem der vorhergehenden Anprüche, dadurch gekennzeichnet, daß diese Kathode in einer Kathodenkammer einer Zelle untergebracht ist, daß eine Anode in einer Anodenkammer der Zelle untergebracht ist und daß Anodenkammer und Kathodenkammer durch eine Ionentauschermembran voneinander getrannt sind.

11. Verfahren nach irgendeinem der vorhergehenden Ansprüche, dadurch gekennzeichnet, daß während der elektrolytischen Chlorreduktion eine konstante Spannung an der Kathode und einer Anode angelegt ist.

12. Verfahren nach Anspruch 11, dadurch gekennzeichnet, daß die zwischen Anode und Kathode angelegte Spannung weniger als etwa 2 V beträgt.

13. Verfahren nach irgendeinem der vorhergehenden Ansprüche, dadurch gekennzeichnet, daß die wässerige Lösung von Chlordioxid und Chlor etwa 0,1 bis etwa 0 g/l Chlordioxid und etwa 0,01 bis etwa 10 g/l Chlor enthält.

FIG.1

Voltammetric reduction of $Cl_2/ClO_2$ mixture

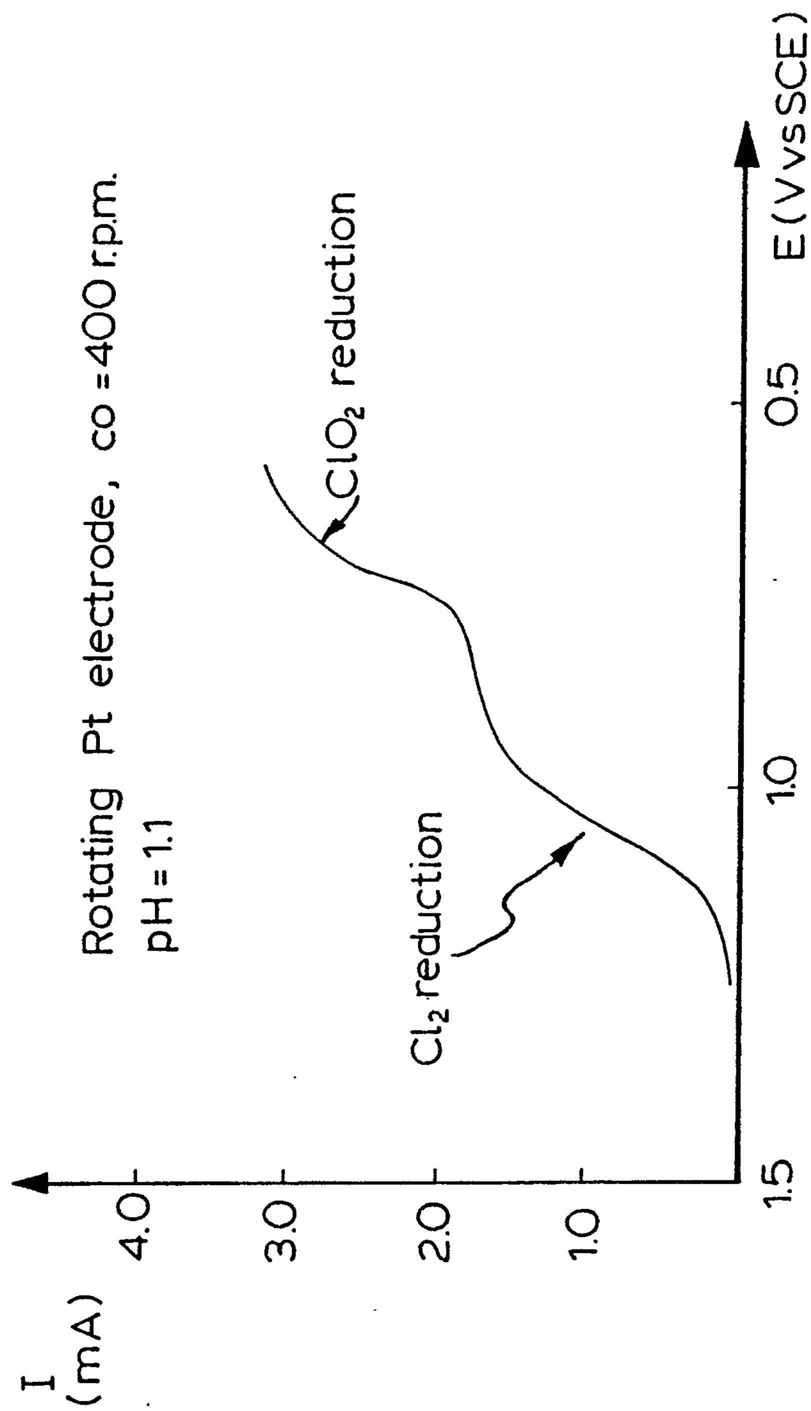

FIG.2

Comparison of $Cl_2$ and $ClO_2$ electroreduction
Pt electrode

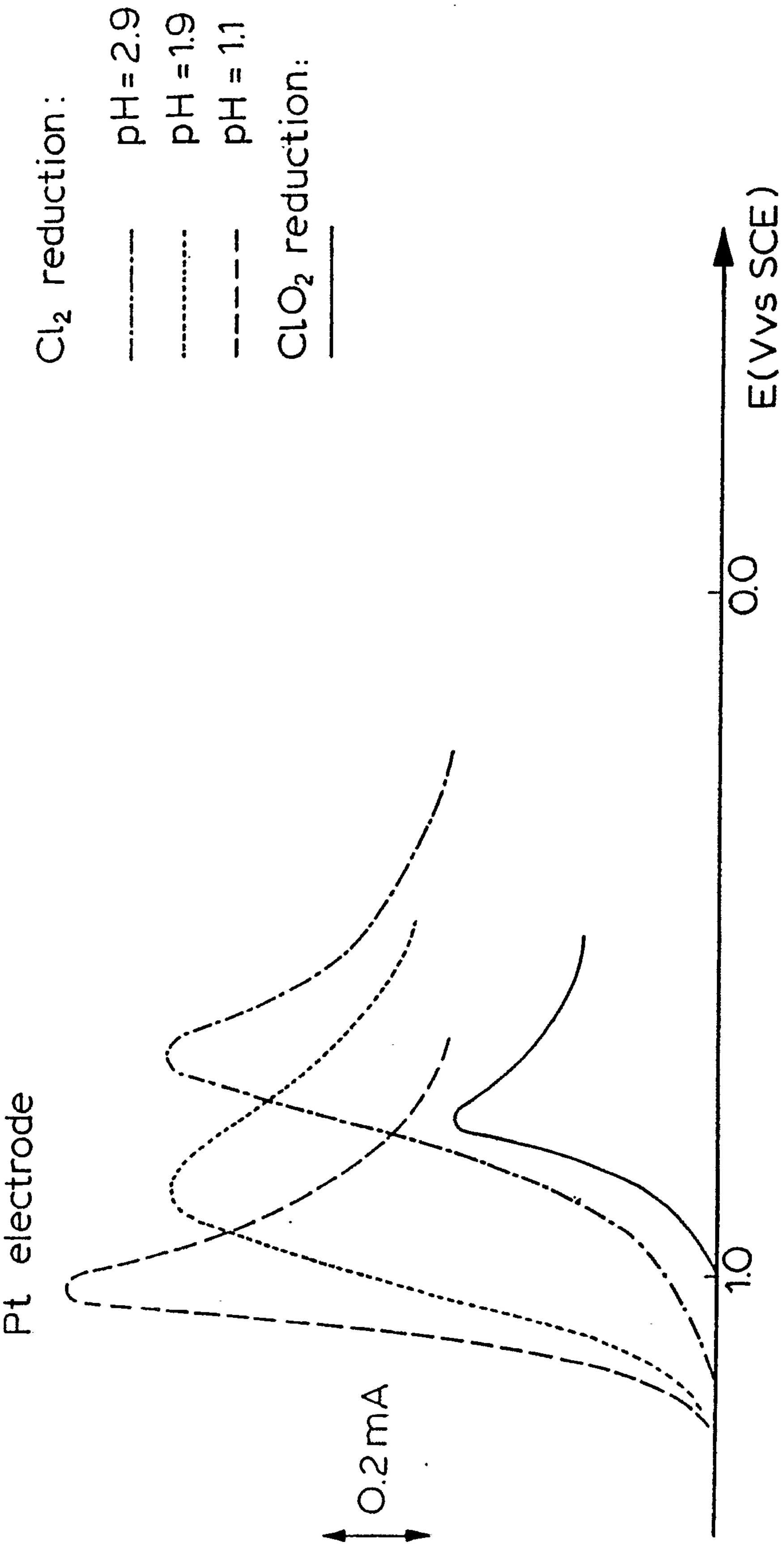

FIG.3

Cyclic voltammograms for $ClO_2/Cl_2$ mixture at various concentrations pH = 0.6

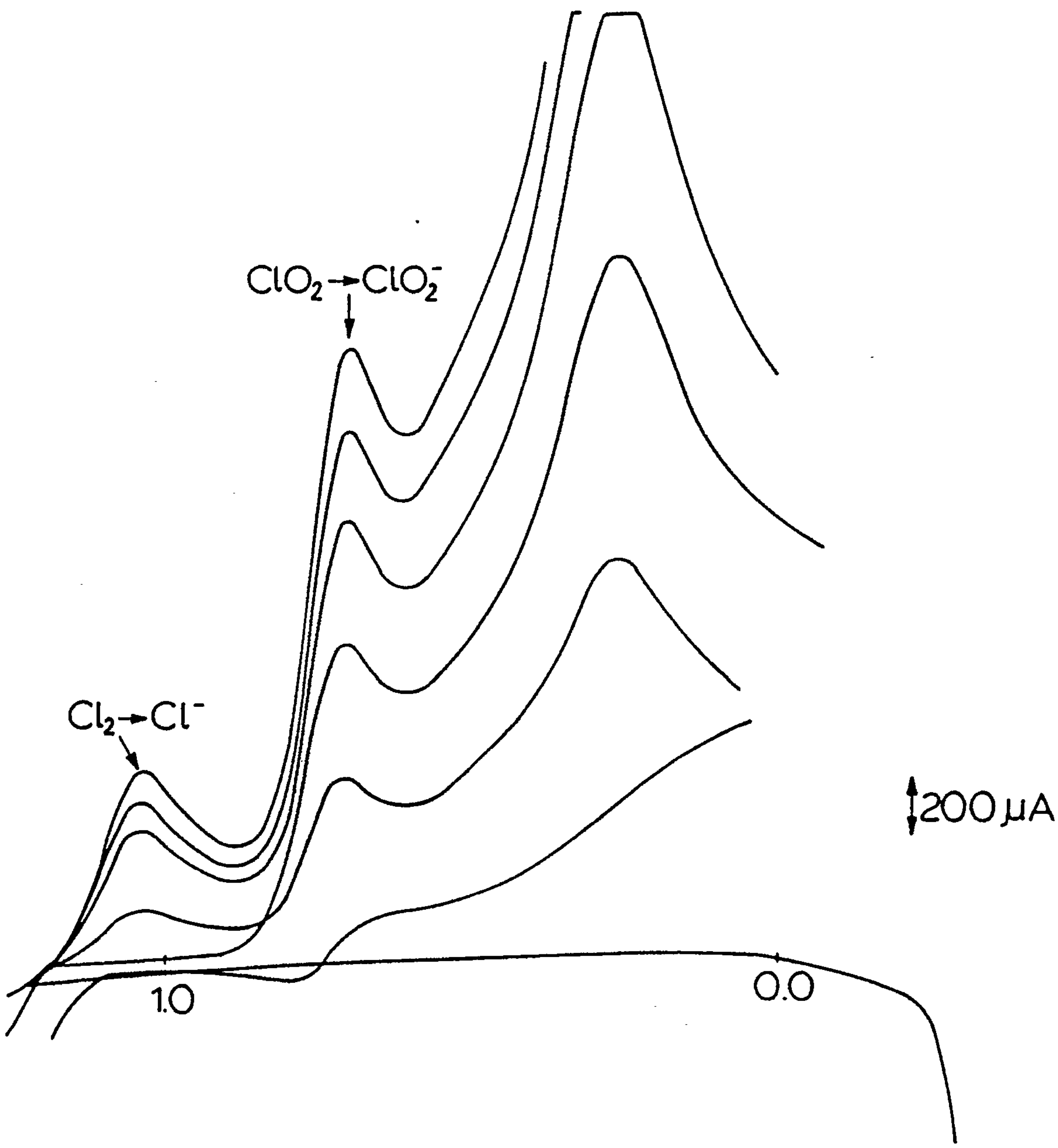

FIG. 4
Electrocatalytic reduction of $Cl_2$ In the presence of $ClO_2$